# EUROPEAN PATENT APPLICATION

(11) **EP 1 742 455 A1**
(43) Date of publication of application: **10.01.2007**
(21) Application number: 05728497.8
(22) Date of filing: 08.04.2005
(51) Int. Cl.: H04M 11/00, G10L 19/00, H03M 7/30, H04L 12/56

(54) **AUDIO COMMUNICATION METHOD AND DEVICE**

(30) Priority: 09.04.2004 JP 2004115408
(71) Applicant: NEC CORPORATION, Minato-ku, Tokyo 108-8001 (JP)
(72) Inventor: DEI, Hiroaki, Minato-ku, Tokyo 108-8001 (JP); OZAWA, Kazunori, Minato-ku, Tokyo 108-8001 (JP); NAKAZAWA, Tatsuya, Minato-ku, Tokyo 108-8001 (JP); KOYAMA, Kazuhiro, Minato-ku, Tokyo 108-8001 (JP)
(74) Representative: Glawe, Delfs, Moll
(86) International application number: PCT/JP2005/006904
(87) International publication number: WO 2005/099243

(57) **Abstract**

An audio communication device includes a plurality of encoding units and decoding units, and switches the encoding format from one to another according to the useable transmission band or to a user audio quality request or to a delay request. The audio encoded data that is received is decoded by selecting an optimal decoding unit according to the encoding format identifier added to the data or according to set information notified from audio communication device 201 of the communication partner. The audio data decoded is temporality stored in audio data buffer 216 and reproduced. The amount of audio data stored in the audio data buffer is controlled so that audio is reproduced without pause.

## Description

### TECHNICAL FIELD

The present invention relates to an audio communication method and device for transmitting and receiving audio via a network.

### BACKGROUND ART

In recent years, the audio communication in which audio data is received and transmitted by packets through a network, i.e., the so-called VolP (Voice over IP), has been widely used. Such audio communication encodes audio (including music, various sound effects, and the like) with a predetermined encoding format and the encoded audio data is transmitted and received, thereby enabling communication with little audio quality degradation, without occupying a wide transmission band.

As representative examples of the audio encoding format, G.711, G.729, AMR-NB (Adaptive Multi Rate-Narrow Band), AMR-WB (Adaptive Multi Rate-Wide Band), MPEG (Moving Picture Experts Group)-4 ACC (Advanced Audio Codec), and the like are known. The technique for distributing audio data encoded according to these encoding formats (hereinafter, called audio encoded data) is VolP (for example, see Japanese Patent Laid-Open No. 2004-072242) which uses an IP (Internet Protocol) network that adopts the packet switching method. VolP is expected to become rapidly popular in mobile communication systems, such as PHS (Personal Handyphone System) and mobile telephone networks.

Further, when the network of the packet switching method is used for data transmission/reception, an arrival fluctuation (jitter) of packets is generated at the reception side. The audio communication device needs a buffer that temporarily stores the received data in order to absorb jitter. When the buffer is large in size, a larger jitter can be treated, however, the delay in audio communication becomes longer because time is required until audio is reproduced. On the other hand, when a buffer is made small in size, delay becomes shorter, however, jitter cannot be absorbed sufficiently, and therefore, there is a problem in that the reproduced audio is disconnected. As buffer control methods, the method is which the decoding process is paused when the amount of packet data stored in the buffer exceeds a predetermined threshold (see Japanese Patent Laid-Open No. 2002-204258) and the method in which the cycle of the decoding process is adjusted at the reception side (see Japanese Patent Laid-Open No. 2003-087318) are known. Also, there is the method in which the packet transmission cycle is adjusted at the transmission side according to notification from the reception side (see Japanese Patent Laid-Open No. 2003-249977).

In the above-mentioned audio communication using the VolP technique, though the encoding bit rate, which is the speed of the encoding process, can be changed, the encoding format used per one session is fixed, and therefore, an optimal encoding format is not always selected according to the needs of the user and the state of the network.

As a technique of enabling the encoding format to be selected during communication, there can be mentioned a method in which an optimal encoding format is selected at the reception side, for example, by transmitting various kinds of audio encoded data. However, it is difficult to adopt such a method, except for a transmission path with a sufficient usable transmission band.

Also, when the buffer control method described in the above patent documents is applied to audio communication, in Japanese Patent Laid-Open No. 2002-204258, there is a possibility that the audio will be paused by spillover data from the buffer when the amount of received data is larger than the amount of data to be reproduced. Further, in Japanese Patent Laid-Open No. 2003-087318, there is a problem that a delay is increased because a sufficient buffer size must be ensured in order to adjust the cycle of the encoding process. Furthermore, in Japanese Patent Laid-Open No. 2003-249977, jitter or a dropout is generated in the notified message in itself, when an unstable transmission path, like a best-effort network and a wireless network, is used. Also, when the fluctuations in jitter are large, it is difficult to notify and control a message in response to these.

Further, in audio communication using the VolP technique, when there is a characteristic difference between audio communication devices that perform audio communication, a difference is generated in the audio capture or the reproduction cycle and causes the reproduced audio to be disconnected.

Also, since a delay caused by the encoding process is generated in addition to the transmission delay caused by the network, in some encoding formats, there are situations in which the number of samples required for encoding is increased and the time required to ensure sample points does not satisfy the delay request for the audio communication.

Further, when the up-link and the down-link in audio communications are different in a communication environment, such as a usable band and a delay, in order to match the communication environments among the audio communication devices that perform communication, the audio encoded data has to be transmitted and received at a low bit rate so as to meet the low processing capacity, and therefore, there is a problem that the quality of the reproduced audio will be degraded.

Further, when encoding formats are arbitrarily switched in order to respond flexibly to delay and to user requests about audio quality, with only switching, the audio data becomes discontinuous during the switching, and therefore, there is also a problem that audio degradation, such as a pause in the produced audio, occurs.

### DISCLOSURE OF THE INVENTION

Accordingly, the present invention has as an object to provide an audio communication method and a device that enables switching to a different encoding format even during audio communication and that can suppress audio quality degradation and an increase in delay.

To achieve the above-mentioned object, according to the present invention, an audio communication device includes a plurality of encoding units and decoding units in order to cope with plural kinds of encoding formats, and the encoding formats and the sampling frequency are switched in accordance with a usable transmission band, or based on user requests regarding audio quality and delay.

According to this arrangement, since switching to a different encoding format is possible even during audio communication, audio quality degradation and an increase in delay can be suppressed. Also, even though the up-link and the down-link are different in the communication environment of audio communication, the encoding format of audio data to be transmitted and the encoding format of received audio data can be optimally selected in accordance with the communication environments of the up-link and the down-link, and therefore higher-quality stable audio communication can be carried out.

Then, the switching timing is adjusted by taking into consideration the start of timing of the encoding process of each encoding format and the difference in a frame length of each encoding format so that the audio corresponding to the audio encoded data after encoding is synchronized, thereby reproducing the audio without pause during the switch of encoding formats.

### BRIEF DESCRIPTION OF THE DRAWINGS

[FIG. 1] FIG. 1 is a block diagram showing a configuration example of an audio communication system.
[FIG. 2] FIG. 2 is a block diagram showing a configuration example of the audio communication device according to the present invention.
[FIG. 3] FIG. 3 is a timing chart showing timing of the encoding process by the first encoding unit and the second encoding unit shown in FIG. 2.
[FIG. 4] FIG. 4 is a block diagram showing a configuration of the buffer control unit according to the first embodiment arranged in the audio communication device of the present invention.
[FIG. 5] FIG. 5 is a block diagram showing a configuration of the buffer control unit according to the second embodiment arranged in the audio communication device of the present invention.

### BEST MODE FOR CARRYING OUT THE INVENTION

Next, the present invention is explained with reference to drawings.

### (First Embodiment)

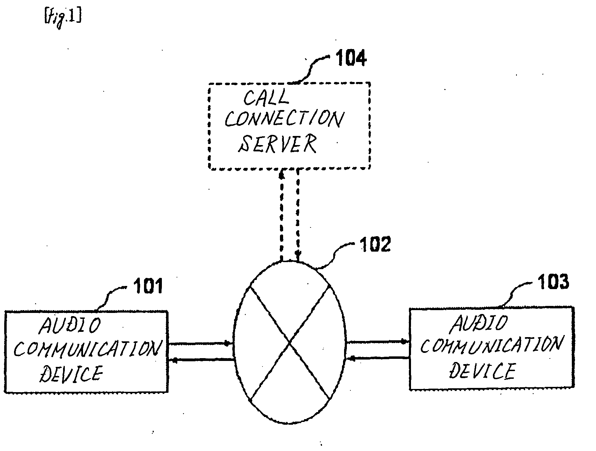

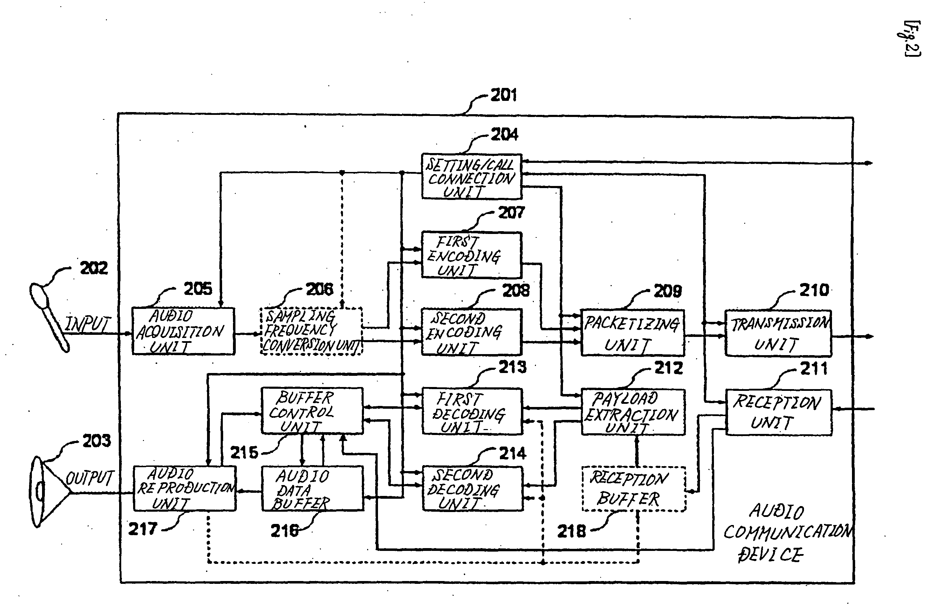

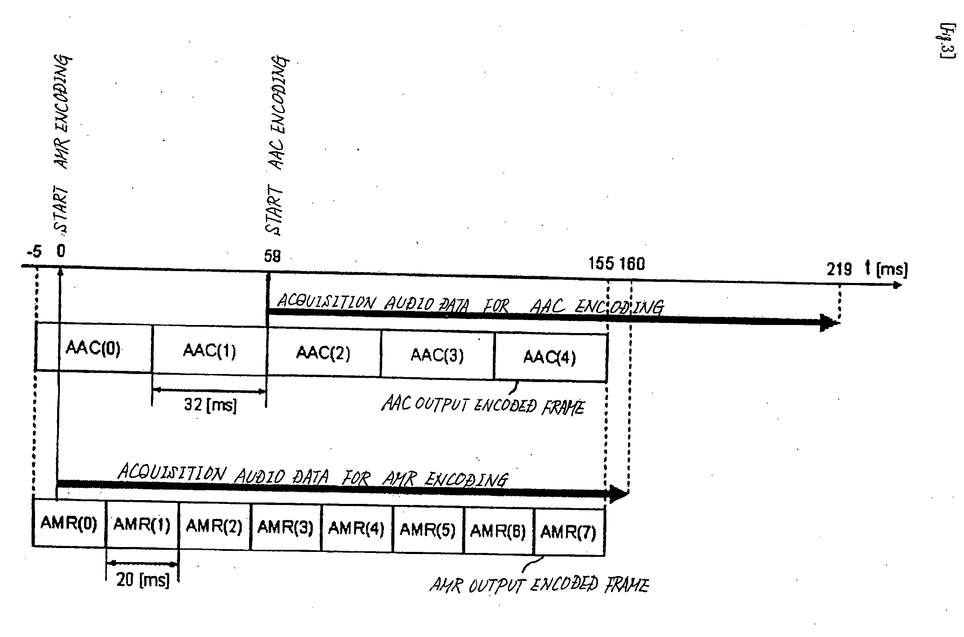

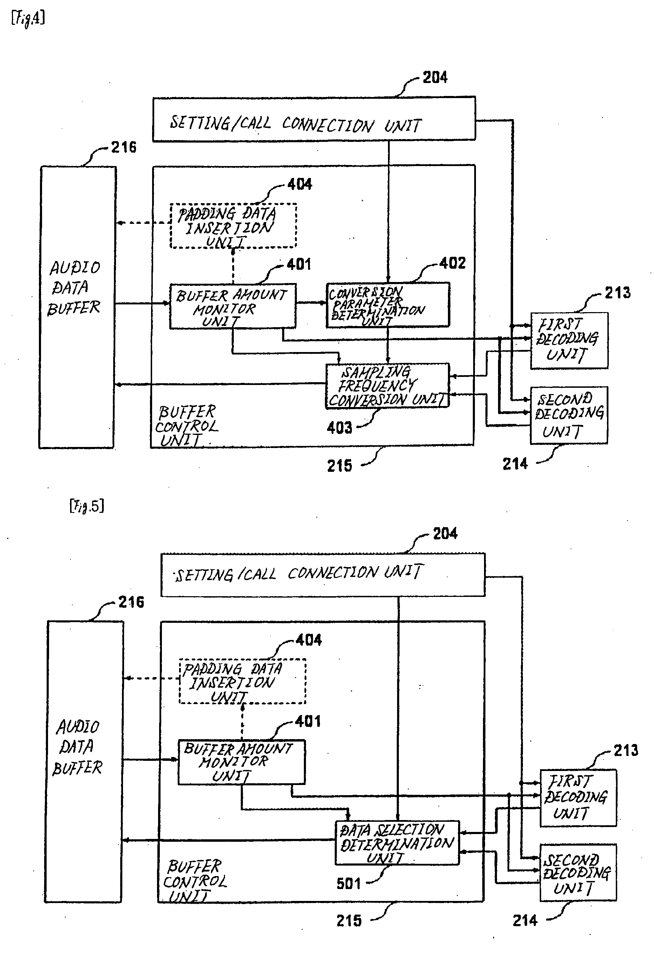

Fig. 1 is a block diagram showing a configuration example of an audio communication system, and FIG. 2 is a block diagram showing a configuration example of the audio communication device according to the present invention. Also, Fig. 3 is a timing chart showing timing of the encoding process by the first encoding unit and the second encoding unit shown in FIG. 2, and FIG. 4 is a block diagram showing a configuration of the buffer control unit according to the first embodiment arranged in the audio communication device of the present invention. Incidentally, audio communication device 201 shown in FIG. 2 is a common configuration example that is available to audio communication device 101 and audio communication device 103.

As shown in FIG. 1, the audio communication system is configured by connecting audio communication device 101 and 103 that mutually transmit and receive audio data through network 102, which is an IP (Internet Protocol) network. Audio communication device 101 and audio communication device 103 execute a known call connection process to establish a call and to perform audio communication.

Call connection server 104 that supplies information (call connection data) required to establish a call to audio communication device 101 and audio communication device 103 may be connected to network 102. In this case, audio communication device 101 and audio communication device 103 previously acquire the call connection data from call connection server 104 and then establish a call by using the acquired call connection data.

Audio communication device 101 and audio communication device 103 may be carried out by an information processing device, such as a mobile telephone and a personal computer, that transmits and receives the encoded audio data and the call connection data according to the packet switching method. Also, the function of call connection server 104 can be carried out by an information processing device, like a server computer, that supplies the call connection data to audio communication device 101 and audio communication device 103 and establishes a call (communication) each other. When mobile telephones are used as audio communication device 101 and audio communication device 103, these are connected to network 102 through a wireless base station device, not shown.

As shown in FIG. 2, audio communication device 201 includes audio acquisition unit 205, sampling frequency conversion unit 206, setting/call connection unit 204, first encoding unit 207, second encoding unit 208, packetizing unit 209, transmission unit 210, reception unit 211, payload extraction unit 212, first decoding unit 213, second decoding unit 214, buffer control unit 215, audio data buffer 216, and audio reproduction unit 217. As described above, when an information processing device is used as audio communication device 201, the function of each element in FIG. 2 is carried out by a combination of an information processing device including a CPU and LSI or a logic circuit. In this case, for example, the function of audio acquisition unit 205 or audio reproduction unit 217 is carried out by LSI (an A(Analog)/D(Digital) converter, a D/A converter), a transistor circuit, or the like. Also, the CPU included in the information processing device executes the process for each element, which is described later, in accordance with a predetermined program, whereby the function of other elements is carried out. Incidentally, audio communication device 201 may be configured by a LSI or a logic circuit that carries out the function of each element shown in FIG. 2.

Audio acquisition unit 205 converts an audio signal (analog signal) input from audio input unit 202, like a microphone, into audio digital data in accordance with the sampling frequency and the number of quantization bits designated by setting/call connection unit 204 or the sampling frequency and the number of quantization bits that are previously set.

First encoding unit 207 and second encoding unit 208 encode the audio data A/D converted in audio acquisition unit 205 in accordance with the encoding format and the sampling frequency designated by setting/call connection unit 204 or in accordance with the encoding format and the sampling frequency that are previously set.

In the first embodiment, explanations relates to case in which first encoding unit 207 encodes the audio data by using the MPEG-4 ACC format and second encoding unit 208 encodes the audio data by using the AMR-WB format. There is no limitation on encoding formats used by first encoding unit 207 and second encoding unit 208, and any format is available. Also, first encoding unit 207 and second encoding unit 208 do not have to use different kinds of encoding formats and may use the same encoding format as long as the sampling frequencies are different. In the first embodiment, although two encoding units are shown in order to simplify the explanations, the number of encoding units is not limited to two, and any number is available. When a transmission path with a sufficiently usable transmission band is used, the audio communication device may transmit audio encoded data that is encoded by a plurality of encoding units.

Packetizing unit 209 adds an identifier of an encoding format (encoding format identifier) designated by setting/call connection unit 204 or a preset encoding format identifier to at least one of the audio encoded data encoded by first encoding unit and second encoding unit 208 and packetizes. It is assumed that the encoding format of audio encoded data and the encoding format identifier are in a corresponding relationship each other.

Transmission unit 210 transmits the packet generated in packetizing unit 209 to network 102 through a port designated by setting/call connection unit 204 or through a preset port in accordance with a destination address. For example, when the audio encoded data is packetized and transmitted in accordance with RTP (Real-time Transport Protocol), packetizing unit 209 packetizes the data while the payload type included in the RTP header to be added and a SSRC (Synchronization Source identifier) or a CSRC (Contributing Source identifier) is used as an encoding format identifier. As to RTP, for example, there are detailed descriptions in H. Schulzrinne, S. Casner, R. Frederick, V. Jacobson, "RTP:A Transport Protocol for Real-Time Applications", RFC 1889, January 1996, Internet <URL: http://www.ietf.org/rfc/rfc1889.txt>, H. Schulzrinne, "RTP Profile for Audio and Video Conferences with Minimal Control", RFC 1890, January 1996, and the like.

At least a plurality of packetizing units 209 or a plurality of transmission units 210 may be arranged to correspond to the plurality of encoding units. In this case, for example, transmission unit 210 may transmit the packet generated in corresponding packetizing unit 209 to network 102 through the destination address and the port designated by setting/call connection processing section 204 or through a preset destination address and a preset port.

Audio communication device 201 according to the first embodiment, controlled by setting/call connection unit 204, transmits and receives necessary information for communication with the audio communication device of the communication partner by using the known SIP (Session Initiation Protocol) and SDP (Session Description Protocol). In this case, setting information, like
a) Address and reception port number of a communication partner;
b) Encoding format and encoding setting (option) of the audio encoded data to be transmitted, and
c) Payload type and payload format, can be transmitted to the communication partner. For example, when the encoding format is AMR-NB and the payload type of RTP is 97, according to SDP, the information described as a=rtpmap: 97 AMR/8000 is transmitted, thereby the corresponding relationship between the encoding format and the encoding format identifier can be notified to the communication partner. At this time, the corresponding relationship between the encoding format and the encoding format identifier may be previously determined among audio communication devices that perform audio communication. However, the payload type is already determined by RFC 1890 depending on an encoding format. For example, in the audio encoding format of G.729, the numeric value of "18" is used. With this value, the encoding format can be specified.

Setting/call connection unit 204 gives each required instruction to audio acquisition unit 205, sampling frequency conversion unit 206, first encoding unit 207, second encoding unit 208, packetizing unit 209, transmission unit 210, reception unit 211, payload extraction unit 212, first decoding unit 207, second decoding unit 208, and audio reproduction unit 217, in order to execute the process of the determined encoding format.

Audio communication device 201 of the first embodiment may be provided with an input unit, not shown, that is used to input desired instructions by a user. When a request regarding audio quality or a time delay is input through the input unit, setting/call connection unit 204 selects an optimal encoding format or sampling frequency in accordance with the request from the user input through the usable transmission band or input through the input unit. Then, each required instruction is given to audio acquisition unit 205, sampling frequency conversion unit 206, first encoding unit 207, second encoding unit 208, packetizing unit 209, transmission unit 210, reception unit 211, payload extraction unit 212, first decoding unit 213, second decoding unit 214, and audio reproduction unit 217 in order to execute the process in accordance with the encoding format that is selected.

Reception unit 211 receives the packet transmitted through network 102 by using a port designated by setting/call connection unit 204 or by using a preset port.

Payload extraction unit 212 extracts the audio encoded data and the encoding format identifier from the packet received by reception unit 211, and supplies the audio encoded data, which is extracted, to first decoding unit 213 or second decoding unit 214 in accordance with the instruction from setting/call connection unit 204.

First decoding unit 213 and second decoding unit 214 decode the audio encoded data supplied from payload extraction unit 212 in accordance with a decoding format designated by setting/call connection unit 204 or in accordance with a preset decoding format.

In the first embodiment, explanations relates to case in which first decoding unit 213 decodes the audio encoded data by using the MPEG-4 AAC format and second decoding unit 214 decodes the audio encoded data by using the AMR-WB format. Similar to the above-mentioned encoding units, there is no limitation on decoding formats used by first decoding unit 213 and second decoding unit 214, and any format is available. Also, first decoding unit 213 and second decoding unit 214 do not have to use different kinds of decoding formats and may use the same decoding format as long as the sampling frequencies are different. In the first embodiment, two decoding units are shown in order to simplify the explanations, but the number of encoding units is not limited to two, and any number is available.

Setting/call connection unit 204 decides the encoding format of the audio encoded data, which is received, in accordance with the combination of the encoding format notified from the audio communication device of the communication partner and the encoding format identifier added to the packet, and selects an optimal decoding unit corresponding to the audio encoded data extracted from the packet and provides instructions for payload extraction unit 212.

Therefore, in the first embodiment, since the audio encoded data that is encoded in the encoding unit in the audio communication device at the transmission side is reproduced by the decoding unit corresponding to the encoding format in the audio communication device at the reception side, the data can be decoded properly even if encoding formats of audio decoded data are switched during communication.

Buffer control unit 215 contracts or expands the audio data decoded in first decoding unit 213 or second decoding unit 214 to accommodate the size of audio data buffer 216 and stores the audio data in audio data buffer 216.

Audio reproduction unit 217 sequentially reads audio data (digital data) stored in audio data buffer 216 and converts the audio data into an audio signal made of an analog signal. Also, audio reproduction unit 217 power-amplifies the audio signal that is A/D converted, as required. The audio signal that is D/A converted by audio reproduction unit 217 is output from audio output unit 203, that acts such as a speaker.

Incidentally, at least a plurality of reception units 211 or a plurality of payload extraction units 212 may be arranged to correspond to the plurality of decoding units. In this case, the encoding format and the setting information of each session (or port number) are received from the audio communication device of the communication partner by using setting/call connection unit 204 or these are previously determined among audio communication devices that perform audio communication, whereby payload extraction unit 212 can pass the audio encoded data to a suitable decoding unit based on the received session (or port number) even if there is no encoding format identifier.

As described above, audio communication device 201 of the first embodiment notifies the audio communication device of the communication partner about the available encoding format and decoding format in accordance with, for example, SDP. When the available encoding format and decoding format are notified by SDP, the encoding format and the decoding format are represented by information that is itemized by descriptions, like a=sendonly, a=recvonly. In communications using SDP, the encoding format at the transmission side may be different from the decoding format at the reception side, and audio communication devices that perform audio communication may not be provided with similar a encoding format and a similar decoding format. Specifically, when SDP is used, a massage can be transmitted and received even if the audio communication devices that perform audio communication do not match with the combination of the same encoding format and decoding format.

On the other hand, when the call connection process is performed by using SIP, audio communication device 101 and audio communication device 103 shown in FIG. 1 each acquire the address of the audio communication device of the communication partner from call connection server 104, and acquire information and the like of the corresponding encoding format by using SDP to start audio communication.

As to SDP, detailed descriptions are given in M. Handley, V. Jacobson, "SDP: Session Description Protocol", RFC 2327, April 1998, Internet <URL: http://www.ietf.org/rfc/rfc2327.txt>, and the like. Also,_as to the SIP, detailed descriptions are given in M. Handley, H. Schulzrinne, E. Schooler, J. Rosenberg, "SIP: Session Initiation Protocol", RFC 2543, March 1999, Internet<URL: http://www.ietf.org/rfc/rfc2543.txt>, and the like.

Now, in audio communication device 201 shown in FIG. 2, encoding formats are switched so that they do not cause a pause in audio communication during a call, the audio data that is A/D converted in audio acquisition unit 205 must be decoded in first encoding unit 207 and second encoding unit 208, respectively.

Here, when first encoding unit 207 and second encoding unit 208 are different in the encoding format and the sampling frequency, in the first embodiment, the audio data that is A/D converted in audio acquisition unit 205 is converted into audio data of the sampling frequency corresponding to each encoding format by using sampling frequency conversion unit 206.

For example, consideration relates to case in which audio acquisition unit 205 performs sampling at 32kHz, first encoding unit 207 encodes the audio data by using the MPEG-4 AAC format at the sampling frequency of 32kHz, and second encoding unit 208 encodes the audio data by using the AMR-WB format at the sampling frequency of 16kHz. In this case, sampling frequency conversion unit 206 outputs the audio data to first encoding unit 207 without changing the sampling frequency and outputs audio data to second encoding unit 208 after the sampling frequency is converted into 16kHz (down sampling). According to this operation, audio data acquired by one audio acquisition unit 205 can be encoded in a plurality of encoding units in accordance with each encoding format.

Sampling frequency conversion unit 206 performs the same process when the sampling frequency is different in each encoding unit but the encoding format is similar. Any known technique is available as the conversion format of the sampling frequency, and therefore detailed explanations are omitted.

In encoding format of audio data, there is a format in which the previous audio data is used and encoding is performed in order to enhance encoding efficiency. In such an encoding format, a delay occurs from the time that the audio signal is input until the audio encoded data is output. For example, in the AMR-WB format, because the audio data that is received 5 ms earlier is used for the encoding process, a 5ms delay occurs the time that the audio data is input until the corresponding audio encoded data is output. Also, in the MPEG-4 AAC format, since a delay of two frames occurs in the encoding process, when the sampling frequency is 32kHz, a 64ms delay occurs the time that the audio data is input until the corresponding audio encoded data is output. Therefore, when the encoding format is switched at the transmission side, the start point of each encoding process is adjusted in order to synchronize the audio that corresponds to the audio encoded data after encoding. Specifically, as shown in FIG. 3, when first encoding unit 207 starts the encoding process of the MPEG-4 AAC format after a 59ms delay relative to the encoding start point (t=0) of the AMR-WB format by second encoding unit 208, both of the audio signals reproduced from these audio encoded data coincide.

Further, the AMR-WB format and the MPEG-4 AAC format are different in the frame length of an encoding unit, in the first embodiment, the switching timing is adjusted with consideration given to the difference of the frame length in each encoding format so as to synchronize the audio signal that corresponds to the audio encoded data after encoding. Specifically, as shown in FIG.3, the encoding format is switched when five frames of the MPEG-4 AAC format (AAC output encoded frame) are output relative to eight frames of the AMR-WB format (AMR output encoded frame), whereby both of the audio signals reproduced from these audio encoded data coincide.

In the audio communication device of the first embodiment, it is unnecessary for first encoding unit 207 and second encoding unit to start the encoding process at the same time, however, as described above, the encoding format is switched with consideration given to the timing gap of the start (restart) of the encoding process by each encoding unit or to a difference in the frame length. On the other hand, in the audio communication device at the reception side, each decoding unit switches the decoding format in the frame unit, whereby the audio is reproduced without pause.

Also, in the audio communication device of the first embodiment, the encoding format may be switched with consideration given to the number of samples of audio data so that the audio signal that corresponds to the audio encoded data after encoding is synchronized in accordance with the encoding format and the sampling frequency designated by setting/call connection unit 204 or in accordance with the encoding format and the sampling frequency that are previously set. For example, in the AMR-WB format, the number of samples per 1 [ms] is 16, and in the MPEG-4 AAC encoding format, the number of samples per 1 [ms] is 32 when the sampling frequency is 32kHz. Specifically, the encoding format may be switched at timing so that the relationship of the number of samples is maintained.

In case of switching to the same encoding format with different frequencies, audio quality degradation caused by switching the encoding format can be suppressed when the same process is performed.

Next, explanations are given of the buffer control unit in the audio communication device shown in FIG. 2 according to the first embodiment with reference to FIG. 4.

As shown in FIG. 4, buffer control unit 215 of the first embodiment includes buffer amount monitor unit 401, conversion parameter determination unit 402, and sampling frequency conversion unit 403.

As described above, the amount of data stored in audio data buffer 216 increases or decreases according to fluctuation in the arrival time of the packets received by reception unit 211 and according to the difference between the audio acquisition cycle by audio acquisition unit 205 at the transmission side and the reproduction cycle by audio reproduction unit 217 at the reception side.

Audio data buffer 216 exists in order to deal with fluctuation in the arrival time of the packets and the difference between the audio acquisition cycle and the reproduction cycle, and in order to deal with a large fluctuation in the arrival time, and because the buffer size and the anticipated amount of audio data (hereinafter called a standard amount) that will be stored in audio data buffer 216 must be set large, the delay in audio communication will increase.

In the first embodiment, fluctuations in arrival intervals of the audio encoded data are measured in reception unit 211, and the standard amount of audio data to be stored in audio data buffer 216 is optimally set to accommodate the magnitude of the fluctuation which is will not expected to be large.

Further, in order to deal with a smaller size of audio data buffer 216, buffer control unit 215 processes the decoded audio data and stores it in audio data buffer 216. Also, buffer control unit 215 monitors the amount of data stored in audio data buffer 216 by buffer amount monitor unit 401.

Conversion parameter determination unit 402 determines the sampling frequency after conversion in accordance with the remaining amount of audio data in audio data buffer 216 and the encoding format designated by setting/call connection unit 204.

Sampling frequency conversion unit 403 converts the sampling frequency of audio data input to buffer control unit 215 into the sampling frequency determined by conversion parameter determination unit 401 and outputs the sampling frequency to audio data buffer 216. For example, when there is no switch to audio data of a different encoding format and to a different sampling frequency and when the amount of data in audio data buffer 216 tends to decrease, sampling frequency conversion unit 403 performs frequency conversion (up-sampling) so that sampling frequency becomes high in accordance with the ratio thereof. In this case, since the number of samples of audio data increases, a decrease of audio data stored in the audio data buffer can be compensated. On the other hand, when the amount of data in audio data buffer 216 tends to increase, sampling frequency conversion unit 403 performs frequency conversion (down-sampling) so that the sampling frequency becomes low. In this case, since the number of samples of audio data deceases, an increase in audio data stored in audio data buffer 216 can be suppressed.

In order to switch the audio data output from first decoding unit 213 and the audio data output from second decoding unit 214 without pause, these audio data must be stored in single audio data buffer 216 and reproduced.

Buffer control unit 215, when the decoding format is switched, performs the conversion process of the sampling frequency in accordance with the decoding format, which is described later, in order to adjust the amount of data in data buffer 216, as described above, in addition to performing the process of converting the sampling frequency.

Specifically, frequency conversion is performed so that the sampling frequency (16kH) of the audio data output from second decoding unit 214 and decoded by the AMR-WB format coincides with the sampling frequency (32kH) of audio data output from first decoding unit 213 and decoded by the MPEG-4 AAC format. However, when the sampling frequencies are different, the band of the audio signal, to which the encoding process and the decoding process are available, is different. Therefore, when audio data is switched to a different decoding format, the band difference of the reproduced audio signal causes a discomfort for listening in some cases.

In the method of performing the encoding process per a constant sample cycle, like the MPEG-4 AAC format, the delay caused by the encoding process is reduced by heightening the sampling frequency, however, the number of packets to be transmitted to network 102 increases though the encoding bit rate is identical, and therefore the overhead amount required for the (RTP/)UDP (User Datagram Protocol)/IP header increases. Therefore, in a transmission path whose usable transmission band is low, though the delay is large, the sampling frequency is lowered by a small overhead amount in order to maintain audio quality. Also, in a transmission path having a sufficient usable transmission band, though the overhead amount is large, there is also available a technique in which the sampling frequency is highlighted and transmission is performed in which there is a small delay amount.

However, in spite of such a technique, it is impossible to remove the discomfort cased by the difference in the reproduced audio band. Therefore, in order to suppress such discomfort, the audio communication device of the first_embodiment,
a) onverts the sampling frequency to accommodate the lower sampling frequency, and
b) allocates code words in each encoding unit to the band of the audio data having the lowest sampling frequency.

In particular, when only voice, not music is transmitted, restricted the band width allocated to code words in first encoding unit 207 and second encoding unit 208 may lead to an improvement in the audio quality. In the first embodiment, also, when plural kinds of encoding formats and sampling frequencies of the audio encoded data are received, the decoding process is performed for only one audio encoded data, and therefore, an increase in the amount of operations required for the decoding process can be suppressed to the minimum.

Buffer amount monitor unit 401 instructs padding data insertion unit 404 to insert mute audio data into audio data buffer 216 to compensate audio data when there is a possibility that the audio data to be stored in audio data buffer 216 will empty. Alternatively, buffer amount monitor unit 401 instructs the decoding unit that reproduces the audio data to output the audio data by the error concealing (concealment) process in the decoding format of the decoding unit and inserts the audio data into audio data buffer 216. According to these processes, it is possible to prevent a pause in the reproduced audio that is caused when audio data buffer 216 becomes empty.

Further, when the audio data stored in audio data buffer 216 is going to overflow, buffer amount monitor unit 401 gives instructions to ensure that the audio data that is input to sampling frequency change unit 403 will be discarded and this prevents a pause in the reproduced audio signal. At this time, audio data that is determined as mute in accordance with at least one of a volume (electric power) and amplitude of the input audio data is discarded, thereby suppressing degradation in the reproduced audio signal to the minimum.

Buffer amount monitor unit 401 may execute the above process in accordance with an instruction from at least one among setting/call connection unit 204, audio reproduction unit 217, first decoding unit 213, and second decoding unit 214, or may execute the above process per a predetermined time by using a timer or the like. The instruction by audio reproduction unit 217 is an instruction that instructs buffer amount monitor unit 401 to check the remaining amount of data in audio data buffer 216 whenever audio reproduction unit 217 reproduces a constant amount of audio data, and the above process may be executed in accordance with the monitor result.

Also, audio communication device 201 of the first embodiment may be provided with reception buffer 218 at the unit subsequent to reception unit 211, and the audio encoded data received by reception buffer 218 may be temporarily stored. In this case, audio reproduction unit 217 may instruct reception buffer 218 to output first data of the audio encoded data that is stored to payload extraction unit 212 whenever a constant amount of audio data is reproduced. At this time, when reception buffer 218 is empty, the decoding unit that reproduces the audio data is instructed to output the audio data by using the error concealing process in the decoding format of the decoding unit. In this case, audio reproduction in audio reproduction unit 217 becomes a trigger to start the process, and the subsequent audio encoded data, which corresponds to the amount of audio data consumption, is output from reception buffer 218. Therefore, since the standard amount of audio data to be stored in audio data buffer 216 can be set to the minimum, audio communication can be performed with little delay.

The merit in switching the encoding format to the audio data, like the audio communication device of the first embodiment, the encoding format can be optimally switched in accordance with audio quality and delay time requested by the user or in accordance with the usable band of the transmission path during communication.

In the first embodiment, the MPEG-4 AAC format used by first encoding unit 207 and first decoding unit 213 is a high-quality encoding format that can transmit not only audio but also music, and the process time required for encoding and decoding becomes long. On the other hand, since the AMR-WB format used by second encoding unit 208 and second decoding unit 214 is an encoding format that specializes in voice signal, and is unsuitable to transmitting a wide band signal, like music. However, in the AMR-WB format, since the process time required for encoding and decoding is short and the encoding bit rate is low, stable audio communication can be carried out even in a communication environment in which the transmission band is restricted.

The audio communication device of the first embodiment is provided with a plurality of encoding units and decoding units for audio data, and therefore, even if the encoding format and the decoding format for transmission and reception do not coincide, audio communication becomes possible. For example, though a network with asymmetric stability in bands or transmission paths between the up-link (transmission) and the down-link (reception) is used, audio communication is possible. Specifically, in a communication environment in which the band is restricted in the up-link and in which a sufficient band is in the down-link, audio encoded data that is encoded by the AMR-WB format by using second encoding unit 208 is transmitted through the up-link, audio encoded data that is encoded by the MPEG-4 AAC format is received through the down-link, and audio data can be decoded and reproduced in first decoding unit 213. Therefore, higher-quality stable audio communication can be carried out.

The encoding format may be switched, in accordance with not only an instruction from setting/call connection unit 204 or an instruction that is previously set, as described above, but also, for example, the arrival state of packets, like fluctuation in packet arrival time and a packet loss, is notified to the audio communication device of the communication partner by using setting/call connection unit 204, and the encoding format may be switched in accordance with the arrival state of packets. Also, a method of instructing the audio communication device at the transmission side to switch the encoding format is also available.

### (Second Embodiment)

Next, explanations are given of the audio communication device of the second embodiment according to the present invention with reference to drawings.

Figure 5 is a block diagram showing a configuration of a buffer control unit according to the second embodiment in the audio communication device of the present invention.

The audio communication device of the second embodiment is different from the first embodiment in the configuration of buffer control unit 215. The other configurations and operations are similar to those of the first embodiment, and therefore detailed explanations thereof are omitted.

As shown in FIG. 5, the buffer control unit of the second embodiment has data selection determination unit 501 instead of parameter determination unit 402 and sampling frequency conversion unit 403 shown in the first embodiment. Buffer amount monitor unit 401 and padding data insertion unit 404 are similar to those of the first embodiment, and therefore explanations thereof are omitted.

Data selection determination unit 501, in accordance with the result of audio data buffer 216 monitored by buffer amount monitor unit 401, when the amount of data stored in audio data buffer 216 tends to increase, culls the audio data decoded by first decoding unit 213 or second decoding unit 214 and stores the audio data in audio data buffer 216. At this time, data selection determination unit 501 determines the amount of the audio data and discards audio data determined as mute, thereby minimizing degradation in reproduced audio signal.

Since the audio communication device of the second embodiment culls the audio data, there is a possibility that the reproduced audio quality degrades in comparison with the quality of the audio communication device of the first embodiment. However, since no process that requires a large amount of operations, such as sampling frequency conversion, is performed, the application is easy when a mobile telephone or the like is used as the audio communication device.

## Claims

1. An audio communication method, comprising the steps of:
encoding each item audio data to be transmitted by using plural kinds of accessible encoding formats;
transmitting at least one kind of audio encoded data among audio encoded data, which is said audio data that is encoded;
decoding said audio encoded data by a suitable encoding format for said audio encoded data among plural kinds of accessible decoding formats when said audio encoded data is received;
temporarily storing said audio data that is encoded in an audio data buffer; and
sequentially reading said audio data from said audio data buffer and reproducing said audio data.

2. The audio communication method according to claim 1, wherein the plural kinds of encoding formats are sampling frequencies that are different one another.

3. The audio communication method according to claim 1, wherein an encoding format for audio, encoded data to be transmitted is different from an encoding format corresponding to a decoding format for audio encoded data that is received.

4. The audio communication method according to claim 1, wherein process start timing of each encoding format is shifted so that audio signal corresponding to audio encoded data after encoding is synchronized.

5. The audio communication method according to claim 1, wherein a number of samples for audio data in each encoding format is set so that audio signal corresponding to audio encoded data after encoding is synchronized.

6. The audio communication method according to claim 1, wherein the switch timing of said encoding format is adjusted in accordance with a frame length that will become a encode unit that is different in each encoding format so that audio corresponding to audio signal encoded data after encoding is synchronized.

7. The audio communication method according to claim 1, wherein the audio encoded data is decoded by a frame unit that is different in each encoding format

8. The audio communication method according to claim 1, wherein the sampling frequency of each kind of audio data to be transmitted is converted to a sampling frequency corresponding to each encoding format.

9. The audio communication method according to claim 1, wherein a code word band allocated for each encoding format is set to a band of audio data having the lowest sampling frequency among the plural kinds of encoding formats.

10. The audio communication method according to claim 1, wherein audio encoded data is additionally provided with an encoding format identifier corresponding to an encoding format of said audio encoded data and is transmitted.

11. The audio communication method according to claim 1, wherein audio encoded data to be transmitted is selected in accordance with at least one of a band of a usable transmission path and a request input through the input format from a user.

12. The audio communication method according to claim 1, wherein the sampling frequency of audio data that is decoded is converted in accordance with the audio data amount stored in the audio data buffer.

13. The audio communication method according to claim 1, wherein a standard amount to be a target amount of audio data stored in the audio data buffer is set to accommodate fluctuation in the arrival time of the audio encoded data.

14. The audio communication method according to claim 1, wherein, when the amount of audio data stored in the audio data buffer exceeds the size of said audio data buffer, audio data determined as mute is discarded.

15. The audio communication method according to claim 1, wherein, when the amount of audio data stored in the audio data buffer becomes empty, audio data is compensated.

16. The audio communication method according to claim 1, wherein the audio encoded data that is received is temporarily stored in a reception buffer, first audio encoded data stored in said reception buffer is output whenever a predetermined amount of audio data is reproduced, and audio data is compensated when said reception buffer is empty.

17. The audio communication method according to claim 15, wherein the audio data to be compensated is mute audio data.

18. The audio communication method according to claim 15, wherein the audio data to be compensated is error concealment encoded data in said decoding format.

19. The audio communication method according to claim 16, wherein the audio data to be compensated is mute audio data.

20. The audio communication method according to claim 16, wherein the audio data to be compensated is error concealment encoded data in said decoding format.

21. The audio communication method according to claim 1, wherein a decoding format for audio encoded data that is received is selected in accordance with at least one kind of information among encoding format identifiers to identify an encoding format added to the audio encoded data that is received, encoding format information obtained by a call connection process, setting information obtained by the call connection process and related to encoding, and a session for receiving the audio encoded data.

22. The audio communication method according to claim 1, wherein an arrival state including a fluctuation in arrival times or a loss rate of the audio encoded data that is received is transmitted to a communication partner, and, when said arrival state is received, at least one of the encoding format and the sampling frequency of the audio encoded data to be transmitted is switched in accordance with said arrival state.

23. An audio communication device, comprising:
an audio acquisition unit for generating audio data digitized by a predetermined sampling frequency from audio signal to be transmitted;
a plurality of encoding units that each encode said audio data by using plural kinds of accessible encoding formats;
a transmission unit for transmitting at least one kind of audio encoded data among audio encoded data, which is, said audio data that is encoded;
a plurality of decoding units that, when said audio encoded data is received, a plurality of decoding units each of which decodes said audio encoded data by using a suitable decoding format for said audio encoded data among plural kinds of accessible decoding formats and which decodes each of said audio encoded data by using a different decoding format;
an audio data buffer that temporarily stores audio data decoded by said decoding unit;
an audio reproduction unit for sequentially reading said audio data from said audio data buffer and reproducing the audio data; and
a setting/call connection unit for controlling switches of said encoding format and said decoding format.

24. The audio communication device according to claim 23, wherein each unit of said plurality of encoding units performs encoding with a different sampling frequency.

25. The audio communication device according to claim 23, wherein an encoding format of the audio encoded data to be transmitted by the transmission unit is different from an encoding format that corresponds to a decoding format for decoding the audio encoded data that is received.

26. The audio communication device according to claim 23, wherein the plurality of encoding units each shift process start timing so that audio signal corresponding to audio encoded data after encoding is synchronized.

27. The audio communication device according to claim 23, wherein the plurality of encoding units set each number of samples for audio data so that audio signal corresponding to the audio encoded data after encoding is synchronized.

28. The audio communication device according to claim 22, wherein the plurality of encoding units adjust switch timing of said encoding format in accordance with a frame length that will become a encode unit that is different in each encoding format, so that audio signal corresponding to audio encoded data after encoding is synchronized.

29. The audio communication device according to claim 23, wherein the plurality of decoding units decode audio encoded data by using a different frame unit in each encoding format.

30. The audio communication device according to claim 23, further comprising:
a sampling frequency conversion unit that converts a sampling frequency of audio data to be transmitted into each sampling frequency that corresponds to the encoding format of the encoding unit.

31. The audio communication device according to claim 23, wherein the plurality of encoding units sets a code word band allocated to each encoding format up to a band of audio data having the lowest sampling frequency among plural kinds of encoding formats.

32. The audio communication device according to claim 23, further comprising:
a packetizing unit for adding an encoding format identifier corresponding to an encoding format of the audio encoded data and transmitting the audio encoded data.

33. The audio communication device according to claim 23, wherein the setting/call connection unit allows the transmission unit to select audio encoded data to be transmitted in accordance with at least one of a band of a usable transmission path and a request input through an input device from a user.

34. The audio communication device according to claim 23, further comprising:
a buffer control unit for converting a sampling frequency of audio data that is decoded in accordance with the audio data amount stored in the audio data buffer.

35. The audio communication device according to claim 34, wherein the buffer control unit sets a standard amount to be a target amount of audio data stored in the audio data buffer to accommodate the fluctuation in arrival times of audio encoded data.

36. The audio communication device according to claim 23, wherein the buffer control unit discards audio data determined as mute when the amount of audio data stored in the audio data buffer exceeds the size of the audio data buffer.

37. The audio communication device according to claim 23, wherein the buffer control unit compensates audio data when the audio data stored in the audio data buffer becomes empty.

38. The audio communication device according to claim 23, further comprising:
a reception buffer that temporarily stores the audio encoded data that is received;
wherein the audio reproduction unit gives an instruction to output first audio encoded data stored in said reception buffer whenever a predetermined amount of audio data is reproduced and to output compensating audio data when said reception buffer is empty.

39. The audio communication device according to claim 37, wherein the audio data to be compensated is mute audio data.

40. The audio communication device according to claim 37, wherein the audio data to be compensated is error concealment encoded data in said decoding format.

41. The audio communication device according to claim 38, wherein the audio data to be compensated is mute audio data.

42. The audio communication device according to claim 38, wherein the audio data to be compensated is error concealment encoded data in said decoding format.

43. The audio communication device according to claim 23, wherein the setting/call connection unit selects a decoding format for audio encoded data that is received in accordance with at least one piece of information among encoding format identifiers to identify an encoding format added to the audio encoded data that is received, encoding format information obtained by a call connection process, setting information obtained by the call connection process and related to encoding, and a session for receiving the audio encoded data.

44. The audio communication device according to claim 23, wherein the setting/call connection unit transmits an arrival state of received data including a fluctuation in arrival time or a loss rate of the audio encoded data that is received to a communication partner, and switches at least one of an encoding format and a sampling frequency of audio encoded data to be transmitted in accordance with said arrival state when said arrival state is received.

45. An audio communication system having the audio communication device according to claim 23 that is mutually connected through a network.

46. The audio communication system according to claim 45, further comprising:
a call connection server that supplies information required to establish a call among audio communication devices and is connected so as to be able to communicate with said audio communication devices through a network.

47. A program causing a computer that mutually transmits and receives audio data through a network to each piece of audio data execute the processes comprising:
encoding each item of audio data digitalized by a predetermined sampling frequency as a subject to be transmitted by using plural kinds of accessible encoding formats;
transmitting at least one kind of audio encoded data among audio encoded data, which is the audio data encoded, from a transmission unit;
decoding said audio encoded data by decoding format suitable for the audio encoded data among plural kinds of accessible decoding format when said audio encoded data is received;
temporarily storing the audio data that is encoded in an audio data buffer; and
sequentially reading said audio data from said audio data buffer and reproducing the audio data.

48. The program according to claim 47, wherein plural kinds of encoding format are sampling frequencies that are mutually different.

49. The program according to claim 47, wherein an encoding format of audio encoded data to be transmitted is different from an encoding format corresponding to a decoding format for decoding audio encoded data that is received.

50. The program according to claim 47, wherein process start up timing of each encoding format is shifted so that audio corresponding to audio encoded data after encoding is synchronized.

51. The program according to claim 47, wherein a number of samples for audio data in each encoding format is each set so that audio corresponding to audio encoded data after encoding is synchronized.

52. The program according to claim 47, wherein switch timing of said encoding format is adjusted in accordance with a frame length that will become an encode unit that is different in each encoding format so that audio corresponding to audio encoded data after encoding is synchronized.

53. The program according to claim 47, wherein the audio encoded data is decoded by a frame unit that is different in each encoding format.

54. The program according to claim 47, wherein the sampling frequency of each piece of audio data to be transmitted is each converted to a sampling frequency corresponding to each encoding format.

55. The program according to claim 47, wherein a code word band allocated for each encoding format is set to a band of audio data having the lowest sampling frequency among plural kinds of encoding format.

56. The program according to claim 47, wherein audio encoded data is additionally provided with an encoding format identifier corresponding to an encoding format of said audio encoded data is added and is transmitted from a transmission unit.

57. The program according to claim 47, wherein audio encoded data to be transmitted is selected in accordance with at least one of a band of a usable transmission path and a request input through an input device from a user

58. The program according to claim 47, wherein a sampling frequency of audio data that is encoded is converted in accordance with the audio data amount stored in the audio data buffer.

59. The program according to claim 47, wherein a standard amount, that is the amount of audio data that is targeted for storage in the audio data buffer, is set so as to accommodate a fluctuation in arrival times of audio encoded data.

60. The program according to claim 47, wherein, when the amount of audio data stored in the audio data buffer exceeds the size of said audio data buffer, audio data determined as mute is discarded.

61. The program according to claim 47, wherein, when the audio data amount stored in the audio data buffer is empty, audio data is compensated.

62. The program according to claim 47, wherein audio encoded data that is received is temporarily stored in a reception buffer, first audio encoded data stored in said reception buffer is output whenever a predetermined amount of audio data is reproduced, and audio data is compensated when said reception buffer is empty.

63. The program according to claim 61, wherein the audio data to be compensated is mute audio data.

64. The program according to claim 61, wherein the audio data to be compensated is error concealment encoded data in said decoding format.

65. The program according to claim 62, wherein the audio data to be compensated is mute audio data.

66. The program according to claim 62, wherein the audio data to be compensated is error concealment encoded data in said decoding format.

67. The program according to claim 47, wherein a decoding format for audio encoded data that is received is selected in accordance with at least one piece of information a encoding format identifier to identify an encoding format added to the audio encoded data that is received, encoding format information obtained by a call connection process, setting information obtained by the call connection process and related to encoding, and a session for receiving the audio encoded data.

68. The program according to claim 47, an arrival state of received data including an arrival fluctuation or a loss rate of the audio encoded data that is received is transmitted by a transmission unit to a communication partner, and at least one of an encoding format and a sampling frequency of audio encoded data to be transmitted is switched in accordance with said arrival state when said arrival state is received.

## Amended claims

### Amended claims under Art. 19.1 PCT

**1.** (Amended) An audio communication method comprising the steps of:
encoding each piece of audio data to be transmitted by using plural kinds of accessible encoding formats;
transmitting at least one kind of audio encoded data among audio encoded data, which is said audio data that is encoded, while performing at least one of:
(a) using a different session for each encoding format; and
(b) adding information to identify said encoding format; when said audio encoded data is received, decoding said audio encoded data by using a suitable decoding format for said audio encoded data among plural kinds of accessible decoding formats in accordance with at least one piece of information among:
(c) information obtained by a call connection process and related to encoding;
(d) preset information related to encoding;
(e) information added to received audio encoded data to identify the encoding format; and
(f) information of said session used to receive encoded data;
temporarily storing said audio data that is encoded in a audio data buffer; and
sequentially reading said audio data from said audio data buffer and reproducing said audio data.

**2.** The audio communication method according to claim 1, wherein the plural kinds of encoding formats are sampling frequencies that are different each other.

**3.** The audio communication method according to claim 1, wherein an encoding format for audio encoded data to be transmitted is different from an encoding format corresponding to a decoding format for audio encoded data that is received.

**4.** (Amended) The audio communication method according to claim 1, wherein one of the following is used so that audio corresponding to audio encoded data after encoding is synchronized:
(a) adjusting process start timing of each encoding format;
(b) setting a number of samples for audio data in each encoding format; and
(c) adjusting switch timing of the encoding format in accordance with a frame length, which is an encoding unit and which is different from each encoding format.

**5.** (Canceled)

**6.** (Canceled)

**7.** The audio communication method according to claim 1, wherein the audio encoded data is decoded by a frame unit that is different in each encoding format.

**8.** The audio communication method according to claim 1, wherein the sampling frequency of each kind of audio data to be transmitted is converted to a sampling frequency corresponding to each encoding format.

**9.** (Amended) The audio communication method according to claim 1, wherein a band to which a code word is allocated for each encoding format is set to a band of audio data having the lowest sampling frequency among plural kinds of encoding formats.

**10.** (Canceled)

**11.** The audio communication method according to claim 1, wherein audio encoded data to be transmitted is selected in accordance with at least one of information a band of a usable transmission path and a request input through the input format from a user.

**12.** (Amended) The audio communication method according to claim 1, wherein the sampling frequency of audio data that is decoded is converted in accordance with the audio data amount stored in the audio data buffer, and the audio data amount to be input into said audio data buffer is adjusted

**13.** The audio communication method according to claim 1, wherein a standard amount to be a target amount of audio data stored in the audio data buffer is set to accommodate fluctuation in the arrival time of the audio encoded data.

**14.** The audio communication method according to claim 1, wherein, when the amount of audio data stored in the audio data buffer exceeds the size of said audio data buffer, audio data determined as mute is discarded.

**15.** (Amended) The audio communication method according to claim 1, wherein, when the audio data amount stored in the audio data buffer is less than a predetermined amount, mute audio data or error concealment encoded data in said decoding format is compensated.

**16.** (Amended) The audio communication method according to claim 1, wherein the audio encoded data that is received is temporarily stored in a reception buffer, first audio encoded data stored in said reception buffer is decoded and said audio data buffer is compensated, whenever a predetermined amount of audio data is reproduced from said audio data buffer, and mute audio data or error concealment encoded data in said decoding format is compensated when said reception buffer is empty.

**17.** (Canceled)

**18.** (Canceled)

**19.** (Canceled)

**20.** (Canceled)

**21.** (Canceled)

**22.** The audio communication method according to claim 1, wherein an arrival state including a fluctuation in arrival times or a loss rate of the audio encoded data that is received is transmitted to a communication partner, and, when said arrival state is received, at least one of the encoding format and the sampling frequency of the audio encoded data to be transmitted is switched in accordance with said arrival state.

**23.** (Amended) An audio communication device, comprising:
an audio acquisition unit for generating audio data digitized by a predetermined sampling frequency from audio to be transmitted;
a plurality of encoding units that each encode said audio data by using plural kinds of accessible encoding formats;
a transmission unit for transmitting at least one kind of audio encoded data among audio encoded data, which is said audio data that is encoded while performing at least one of:
(a) using a different session for each encoding format; and
(b) adding information to identify said encoding format; a plurality of decoding units, when said audio encoded data is received, that decodes said audio encoded data by using a suitable decoding format for said audio encoded data among plural kinds of accessible decoding format, and that decodes each of said audio encoded data by using a different decoding formats, in accordance with at least one piece of information among:
(c) information obtained by a call connection process and related to encoding;
(d) preset information related to encoding;
(e) information added to received audio encoded data to identify the encoding format; and
(f) information of said session used to receive encoded data;
an audio data buffer that temporarily stores audio data decoded by said decoding unit;
an audio reproduction unit for sequentially reading said audio data from said audio data buffer and for reproducing the audio data; and
a setting/call connection unit for controlling switches of said encoding format and said decoding format.

**24.** The audio communication device according to claim 23, wherein each unit of said plurality of encoding units performs encoding with a different sampling frequency.

**25.** The audio communication device according to claim 23, wherein an encoding format of the audio encoded data to be transmitted by the transmission unit is different from an encoding format that corresponds to a decoding format for decoding the audio encoded data that is received.

**26.** (Amended) The audio communication device according to claim 23, wherein the plurality of encoding units performs one of:
(a) adjusting process start timing of each encoding format;
(b) setting the number of samples for audio data in each encoding format; and
(c) adjusting switch timing of the encoding format in accordance with a frame length, which is an encoding unit and which is different from each encoding format so that audio corresponding to audio encoded data after encoding is synchronized.

**27.** (Canceled)

**28.** (Canceled)

**29.** The audio communication device according to claim 23, wherein the plurality of decoding units decode audio encoded data by using a different frame unit in each encoding format.

**30.** The audio communication device according to claim 23, further comprising:
a sampling frequency conversion unit that converts a sampling frequency of audio data to be transmitted into each sampling frequency that corresponds to the encoding format of the encoding unit.

**31.** (Amended) The audio communication device according to claim 23, wherein the plurality of encoding units sets a band to which a code word is allocated to each encoding format up to a band of audio data that has the lowest sampling frequency among plural kinds of encoding formats.

**32.** (Canceled)

**33.** The audio communication device according to claim 23, wherein the setting/call connection unit allows the transmission unit to select audio encoded data to be transmitted in accordance with at least one of a band of a usable transmission path and a request input through an input device from a user.

**34.** (Amended) The audio communication device according to claim 23, further comprising:
a buffer control unit for converting a sampling frequency of audio data that is decoded in accordance with the audio data amount stored in the audio data buffer and for adjusting the audio data amount to be input into said audio data buffer.

**35.** The audio communication device according to claim 34, wherein the buffer control unit sets a standard amount to be a target amount of audio data stored in the audio data buffer to accommodate the fluctuation in arrival times of audio encoded data.

**36.** The audio communication device according to claim 23, wherein the buffer control unit discards audio data determined as mute when the amount of audio data stored in the audio data buffer exceeds the size of the audio data buffer.

**37.** (Amended) The audio communication device according to claim 23, wherein the buffer control unit compensates mute audio data or error concealment encoded data in said decoding format when the audio data amount stored in the audio data buffer is less than a predetermined amount.

**38.** (Amended) The audio communication device according to claim 23, further comprising:
a reception buffer that temporarily stores the audio encoded data that is received;
wherein the audio reproduction unit decodes first audio encoded data stored in said reception buffer whenever a predetermined amount of audio data is reproduced from said audio data buffer and compensates said audio data buffer, and compensates mute audio data or error concealment encoded data in said decoding format for said audio data buffer when said reception buffer is empty.

**39.** (Canceled)

**40.** (Canceled)

**41.** (Canceled)

**42.** (Canceled)

**43.** (Canceled)

**44.** The audio communication device according to claim 23, wherein the setting/call connection unit transmits an arrival state of received data including a fluctuation in arrival time or a loss rate of the audio encoded data that is received to a communication partner, and switches at least one of an encoding format and a sampling frequency of audio encoded data to be transmitted in accordance with said arrival state when said arrival state is received.

**45.** An audio communication system having the audio communication device according to claim 23 that is mutually connected through a network.

**46.** The audio communication system according to claim 45, further comprising:
a call connection server that supplies information required to establish a call among audio communication devices and is connected so as to be able to communicate with said audio communication devices through a network.

**47.** (Amended) A program causing a computer that mutually transmits and receives audio through a network to execute the processes comprising:
encoding each piece of audio data digitalized by a predetermined sampling frequency as a subject to be transmitted by using plural kinds of accessible encoding formats;
transmitting at least one kind of audio encoded data among audio encoded data, which is audio data encoded, from a transmission unit, while performing at least one of:
(a) using a different session for each encoding format; and
(b) adding information to identify said encoding format;
when said audio encoded data is received, decoding said audio encoded data by a suitable decoding format for said audio encoded data among plural kinds of accessible decoding formats in accordance with at least one piece of information among:
(c) information obtained by a call connection process and related to encoding;
(d) preset information related to encoding;
(e) information added to received audio encoded data to identify the encoding format; and
(f) information of said session used to receive encoded data;
temporarily storing said audio data that is encoded in an audio data buffer; and
sequentially reading said audio data from said audio data buffer and reproducing said audio data.

**48.** The program according to claim 47, wherein plural kinds of encoding format are sampling frequencies that are mutually different.

**49.** The program according to claim 47, wherein an encoding format of audio encoded data to be transmitted is different from an encoding format corresponding to a decoding format for decoding audio encoded data that is received.

**50.** (Amended) The program according to claim 47, wherein at least one of the following is used so that audio corresponding to audio encoded data after encoding is synchronized:
(a) adjusting process startup timing of each encoding format;
(b) setting the number of samples of audio data in each encoding format; and
(c) adjusting switch timing of the encoding format in accordance with a frame length, which is an encoding unit and which is different from each encoding format;
so that audio corresponding to audio encoded data after encoding is synchronized.

**51.** (Canceled)

**52.** (Canceled)

**53.** The program according to claim 47, wherein the audio encoded data is decoded by a frame unit that is different in each encoding format.

**54.** The program according to claim 47, wherein the sampling frequency of each piece of audio data to be transmitted is each converted to a sampling frequency corresponding to each encoding format.

**55.** (Amended) The program according to claim 47, wherein a band to which a code word is allocated for each encoding format is set to a band of audio data having the lowest sampling frequency among plural kinds of encoding formats.

**56.** (Canceled)

**57.** The program according to claim 47, wherein audio encoded data to be transmitted is selected in accordance with at least one of a band of a usable transmission path and a request input through input means from a user.

**58.** (Amended) The program according to claim 47, wherein a sampling frequency of audio data that is encoded is converted in accordance with the audio data amount stored in the audio data buffer, and the audio data amount to be input into said audio data buffer is adjusted.

**59.** The program according to claim 47, wherein a standard amount, that is the amount of audio data that is targeted for storage in the audio data buffer, is set so as to accommodate a fluctuation in arrival times of audio encoded data.

**60.** The program according to claim 47, wherein, when the amount of audio data stored in the audio data buffer exceeds the size of said audio data buffer, audio data determined as mute is discarded.

**61.** (Amended) The program according to claim 47, wherein, when the audio data amount stored in the audio data buffer is less than a predetermined amount, mute audio data or error concealment encoded data in said decoding format is compensated.

**62.** (Amended) The program according to claim 47, wherein the audio encoded data that is received is temporarily stored in a reception buffer, first audio encoded data stored in said reception buffer is decoded and said audio data buffer is compensated, whenever a predetermined amount of audio data is reproduced from said audio data buffer, and mute audio data or error concealment encoded data in said decoding format is compensated when said reception buffer is empty.

**63.** (Canceled)

**64.** (Canceled)

**65.** (Canceled)

**66.** (Canceled)

**67.** (Canceled)

**68.** The program according to claim 47, wherein an arrival state of received data including a fluctuation in arrival times or a loss rate of the audio encoded data that is received is transmitted by a transmission unit to a communication partner, and at least one of an encoding format and a sampling frequency of audio encoded data to be transmitted is switched in accordance with said arrival state when said arrival state is received.
